# EUROPEAN PATENT SPECIFICATION

(11) **EP 3 577 747 B1**
(45) Date of publication and mention of the grant of the patent: **19.01.2022**
(21) Application number: 18703292.5
(22) Date of filing: 31.01.2018
(51) Int. Cl.: H02K 15/04, H02K 3/12, H02K 15/06

(54) **STATOR WINDING FOR AN ELECTRICAL MACHINE**
STATORWICKLUNG FÜR EINE ELEKTRISCHE MASCHINE
ENROULEMENT DE STATOR POUR MACHINE ÉLECTRIQUE

(30) Priority: 02.02.2017 GB 201701712
(43) Date of publication of application: 11.12.2019
(73) Proprietor: Safran Electrical & Power, 31702 Blagnac Cedex (FR)
(72) Inventor: FLOWER, Paul David, Aston Clinton Buckinghamshire HP22 5EP (GB)
(74) Representative: Palmer, Benjamin Jeffrey
(86) International application number: PCT/EP2018/052437
(87) International publication number: WO 2018/141814

(56) References cited:
- EP-A2- 2 688 183
- WO-A1-2015/198432
- US-A1- 2011 012 467
- US-A1- 2014 035 404
- US-A1- 2016 049 841

## Description

### FIELD OF THE INVENTION

The invention relates to conductor windings for an electrical machine rotational machine, in particular an electromagnetic multi-phase generator. The invention relates in particular to windings and methods of manufacture of such windings for multi-phase generators used in aircraft.

### BACKGROUND OF THE INVENTION

Multi-phase generators and their general principles of construction will be well known to the person skilled in multi-phase electrical machines. As will be well understood, a multi-phase generator generally comprises a stator having a large number of winding slots. These slots are provided for carrying conductors of the windings of the stator. In modern generators, it is common to find up to 100 such winding slots and each slot typically contains two conductors, one arranged radially inward of the other, and each extending longitudinally through the stator, parallel with an axis of rotation of the generator. These conductors must be connected to one another at each end of the stator. Typically, at a first end of the stator, the inner winding of a first slot is connected to the outer winding of a second slot. In a typical three phase machine, these first and second slots will be arranged around the circumference of the stator, separated by a radial angle from one another, for example by a circumferential offset angle of 60 degrees. A single conductor will exit a first end of the stator at a first point, will extend circumferentially around the end face of the stator, outside of the stator core, and will re-enter a second slot in the stator core having travelled a certain angular distance around the end of the stator. As mentioned, in some examples this angle is around 60 degrees for certain three phase generators used in aircraft, but can be different for different generator configurations or numbers of phases.

Typically, this path of the conductors outside of the stator core is achieved by bending the conductor in the region of its exit and entrance points to the slots in the core of the stator. Typically, for electromagnetic reasons, the profile of the conductor is such that its radial dimension in the stator is greater than its circumferential dimension and so the conductor can only typically be bent in a direction perpendicular to the slot in stator, and in a certain direction (i.e. the direction of the shorter, circumferential, direction). The required form for routing the conductor path around the stator core end face in a circumferential direction as described above, is sometimes therefore typically formed by either brazing separate conductors together, or by using a complicated set of tooling to produce a "hairpin" shaped conductor with the appropriate geometry. These techniques add time, cost and complexity to the manufacturing process for the stator and the associated generator of which it forms a component. WO2015/198432 discloses bending U-shaped components for a stator winding into a U-shaped form, inserting the legs of the bent component into a stator core and connecting them to further electrical conductors at the distal ends of the legs.

However, a certain air gap must be maintained between the conductors for electrical insulation purposes and for thermal cooling purposes. A further limitation is that the size of the conductor wires used, and hence their electrical resistance and the electrical losses experienced in the stator, is dictated by the size of the slot through which the conductor must be fitted. With all these restrictive factors in place, the space taken up outside the stator core to provide appropriate connections with necessary air gaps in between can contribute significantly to the overall length of the stator, and resultant overall length of the generator unit of which the stator forms a component. The bent end windings can take up a significant "overhang", measuring up to around 35% of the overall length of the stator assembly, including all of the windings. In certain designs of generators, the overhangs can take up as much as 60% of the total length. The space around the outside of this "overhang" can only be used at one end of the generator in current designs, and is in some cases otherwise redundant at the opposite end.

### SUMMARY OF THE INVENTION

In addressing the drawbacks of the prior art, the present invention aims to provide a method of manufacture and an improved construction of windings of a stator, which minimises the axial overhang length at, at least one end of the stator. The invention further enables the conductor cross-section in the overhang region to be greater than when is passes through the core, which can help with overall efficiency and thermal management.

This is enabled by use of casting methods to cast pre-formed conductors outside of the stator core, and then inserting them cast conductors into lots of the stator core. Although direct casting of conductors in the core, for example, of a motor, has been proposed, this is not necessarily practical in high-efficiency generators since the particular materials used in the stator core can be unsuited to the high temperatures required to cast copper conductors. Further, the complex paths required to be taken by the windings of the stator outside of the stator do not lend themselves easily to casting in-situ.

In a first aspect, the invention provides a method of manufacturing an electrical machine, preferably for use in aircraft or the aerospace sector. The method comprises the steps of:
casting in a mould a conductor for a winding of the stator of the generator, the conductor being cast having first and second substantially parallel legs and a bridge portion extending, in a direction substantially perpendicular to the legs, between respective first ends of the first and second legs, to electrically connect the first and second legs, the bridge portion being cast so as to comprise: a first bridge part extending in a first plane substantially perpendicular to the first and second legs, from a first end of the first leg; a second bridge part, extending from a first end of the second leg, in a second plane substantially perpendicular to the first and second legs, to connect the second leg to the first bridge part; and a longitudinally extending portion extending longitudinally to the stator and connecting the first bridge part and the second bridge part;
removing the conductor from the mould; and
inserting the first and second legs of the conductor into a slots in a stator core of the multi-phase generator, such that at least a portion of the bridge portion lies in a plane substantially parallel with an end face of the core, the legs of the conductor being cast so as to extend within the first and second slots of the stator core, from the bridge portion located at a first longitudinal end of the stator core, to a second longitudinal end of the stator core.

The method of the invention enables a more effectively dimensioned 'hairpin' or substantially u-shaped component of a winding for a stator to be manufactured by casting it in the desired shape, with appropriately shaped and dimensioned legs for passing longitudinally along the length of the stator, and with a more efficiently configured bridge section joining the legs together. Casting of such components has not been used to date and in the prior art, these components are commonly formed from a length of wire having a generally uniform cross-section along its length. The novel casting method allows the different legs and/or the bridge section to be provided with cross-sections of differing shapes or dimensions or aspect ratios, to increase electrical and/or magnetic performance of the final manufactured product.

The at least one conductor may preferably be cast such that the bridge portion of the conductor comprises a greater cross-sectional area than at least one of the first and/or second leg. This allows electrical resistance in the bridge portions outside of the core to be reduced, which reduces heat losses in this portion.

The at least one conductor may be cast such that a cross-section of the first leg has a different, preferably greater, dimension in a radial direction of the stator assembly, than that of the second leg. The at least one conductor may be cast such that a cross section of the second leg has a different, preferably greater, dimension in a circumferential direction of the stator assembly than that of the first leg. Providing different cross sections in the legs can allow a more efficient use of space in the magnetic core, so that electrical and/or magnetic performance can be improved.

The method may further comprise simultaneously inserting legs of a plurality of the conductors into a plurality of corresponding slots in the stator of the generator. This allows the pre-assembled conductors, sometimes referred to as 'hair-pins' in view of their shape, to be pre-assembled into an array outside of the core and then inserted simultaneously into the core.

The bridge portion of the at least one conductor is cast to comprise:
a second bridge part, extending from a first end of the second leg, in a second plane substantially perpendicular to the first and second legs, to connect the second leg to the first bridge part; and
a longitudinally extending portion extending longitudinally to the stator and connecting the first bridge part and the second bridge part.

The longitudinally extending portion may be provided in the form of a step.

The longitudinally extending step portion allows a longitudinal step to be created in the conductor, preferably at a radially outward extremity in the bridge portion. This also enables a space-efficient change in longitudinal direction of the path of the conductor, since in order to pass from an inner position on a first slot, to an outer position on a second slot of the core, it is necessary for the conductor to pass around an adjacent conductor assembled on the stator.

The bridge portion of the conductor may be configured to provide an electrical path between a first end of the first leg and the first end of the second leg, such that the first leg is disposed in a radially inner position in a first slot of the core and the second leg is disposed in a radially outer position in a second slot of the core.

The at least one conductor may be cast such that:
the first part of the bridge portion is configured to provide a conductive path extending through a first radial distance and a first circumferential distance relative to the core;
the second part of the bridge portion is arranged to provide a conductive path over a second radial distance and a second circumferential distance to connect the second leg to the first part of the bridge portion; and
the radial distance provided by the second part is less than the radial distance provided by the first part.

The at least one conductor may be cast such that:
at least one of the first or second parts of the bridge portion has a first sub-part which has a tighter radius of curvature in a plane perpendicular to a longitudinal axis of the stator than a second sub-part, the first sub-part being located radially inward of the second sub-part.

At least one slot in the array of slots in the stator core may be arranged to provide a fluid cooling channel between the first and second conductor legs in the channel.

The channel may comprise at least one projection configured to retain the first and second legs in the channel in separation, to allow fluid to pass longitudinally along the channel between the first and second legs in the channel.

The method may further comprise one or more of the steps of:
arranging a plurality of the cast conductors in a non-circular array, such that in the array, a first part of a bridge portion of a first conductor in the array overlaps a second part of a bridge portion of a second conductor placed adjacent the first conductor in the array, the legs of the first and second conductors extending substantially parallel to one another;
and preferably:
   wrapping the non-circular array into a substantially circular array, with the first and/or second respective legs of the conductors defining first and/or second substantially circular arrays; and
   inserting legs of the conductors into slots in a core of the stator.

The method according may further comprise arranging a plurality of conductors of the stator assembly such that:
for at least one first conductor in the array, a bridge portion of a second conductor in the array passes between a first part of the bridge portion of the first conductor and the core; and
a second part of the bridge portion of the first conductor passes between a first part of a bridge portion of a third conductor and the core.

This novel method of manufacture, allows the previously-used bending or brazing operations to be avoided, and a more efficient structure of the conductor can be formed to enable a minimal distance of "overhang" of the windings of the stator outside and end of the stator core. This reduces the overall length and weight of the multi-phase generator. This is particularly beneficial in aircraft applications, where both space and weight are at a premium.

In a further aspect, a stator for a multi-phase electrical machine, preferably for use in aircraft, is provided, comprising:
a stator core having a substantially annular cross section and having a plurality of slots extending longitudinally in a direction of a rotation axis of the stator, for receiving conductors to form magnetic windings of the stator; and
a substantially circular array of cast conductors, cast conductors of the array comprising:
   a first substantially straight leg and a second substantially straight leg extending substantially parallel to one another within first and second slots of the stator core; and
   a bridge portion, comprising:
      a first bridge part extending in a first plane substantially perpendicular to the first and second legs, from a first end of the first leg, to form a part of an electrical connection between the first and second legs;
      a second bridge part, extending from a first end of the second leg, in a second plane substantially perpendicular to the first and second legs, to connect the second leg to the first bridge part; and
      a step portion extending longitudinally to the stator and connecting the first bridge part and the second bridge part;
   wherein the first substantially straight leg and the second substantially straight leg extend within the first and second slots of the stator core from the bridge portion at a first longitudinal end of the core, to a second longitudinal end of the stator core.

The longitudinally extending step portion allows a longitudinal step to be created in the conductor, preferably at a radially outward extremity in the bridge portion. This also enables a space-efficient change in longitudinal direction of the path of the conductor, since in order to pass from an inner position on a first slot, to an outer position on a second slot of the core, it is necessary for the conductor to pass around an adjacent conductor assembled on the stator.

Conductors of the array of conductors may be arranged such that:
for at least one first conductor in the array, a bridge portion of at least one second conductor in the array passes between a first part of the bridge portion of the first conductor and the core; and
a second part of the bridge portion of the first conductor passes between a first part of a bridge portion of at least one third conductor and the core.

Conductors of the array of conductors may be arranged such that the bridge portion of the conductor comprises a greater cross-sectional area than at least one of the first and/or second leg.

The at least one conductor may preferably be configured such that the bridge portion of the conductor comprises a greater cross-sectional area than at least one of the first and/or second leg. This allows electrical resistance in the bridge portions outside of the core to be reduced, which reduces heat losses in this portion.

The at least one conductor may be configured such that a cross-section of the first leg has a different, preferably greater, dimension in a radial direction of the stator assembly, than that of the second leg. Providing different cross sections in the legs can allow a more efficient use of space in the magnetic core, so that electrical and/or magnetic performance can be improved.

### BRIEF DESCRIPTION OF THE DRAWINGS

Further features and advantages of the present invention will become apparent from the following description of an embodiment thereof, presented by way of example only, and by reference to the drawings, wherein like reference numerals refer to like parts, and wherein:
Figure 1 shows a view of the first end of the stator in accordance with aspects of the present invention;
Figure 2 shows a view of a second end of the stator of claim 1;
Figure 3 shows detail of the first end of the stator of figure 1;
Figure 4 shows an alternative view of the detail of figure;
Figure 5 shows a prospective view of the first end of the stator of figures 1 to 4 with a number of conductors removed from illustrations;
Figure 6 shows a cross-section through a portion of the stator of figures 1 to 6;
Figure 7 shows a conductor in accordance with an aspect of the invention;
Figure 8 shows a partially-assembled array of conductors of the invention; and
Figure 9 shows a substantially cylindrical array of conductors of the invention prior to insertion in a stator core in accordance with aspects of the invention.

### DETAILED DESCRIPTION OF EMBODIMENTS

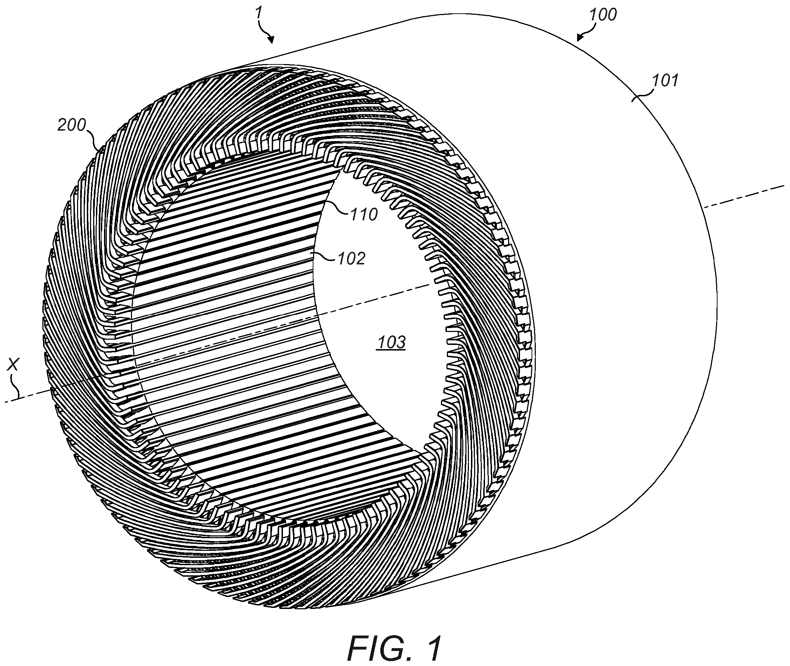

Figure 1 shows a stator (1) for a multi-phase electrical machine in accordance with aspects of the present invention. Stator assembly (1) includes a core (100). As can be seen and as is typical for known electrical machines, the core (100) has a substantially cylindrical outer surface (101) and a substantially cylindrical inner surface (102). As will be appreciated by the skilled reader, in a fully assembled electrical machine, such as a motor or a generator, a rotor will be present within a void (103) provided in the stator core (100), and will be arranged to rotate relative to the stator core (100) about a rotation axis (X). Magnetic flux created in the rotor interacts with the stator windings to generate a voltage and/or current in the stator windings in a conventional manner. The axis X extends in a longitudinal direction relative to the axis of rotation of the stator assembly (1). As will also be understood by the skilled reader, the stator (1) comprises of a plurality of slots (110) which extend longitudinally along the length of the stator core (100). In the illustrated example, the slots (110) extend substantially parallel with the rotation axis (X) of the stator assembly. The slots (110) are arranged in a substantially circular array and are arranged with a longitudinal opening toward the inner surface (102) of the core (100). This opening in the or each slot(s) preferably extends along substantially all of the length of the core (100). As will be appreciated by a skilled reader, each slot has disposed in it first and second conductors or conductor portions defining separate electrical paths. The first conductor extends longitudinally within the slot at an inner radial position, with a second conductor extending through the same slot at a radially outer position relative to the radially inner conductor. The two conductors in a slot preferably occupy substantially the same circumferential position relative to the core - i.e. they are at the same angular position around the circumference of the core in the same slot. These features will be further illustrated in greater detail in later figures. The stator assembly (1) of Figure 1 comprises slots and/or conductors (200) in accordance with aspects of the present invention.

As can be appreciated from the overall assembly shown in Figure 1, the longitudinal extent of the overhang portion, where the legs of the conductors (200) are connected to one another outside of the core (100) is relatively small, when compared to prior arrangements of stator windings, where bent conductors and/or brazed connections have been used.

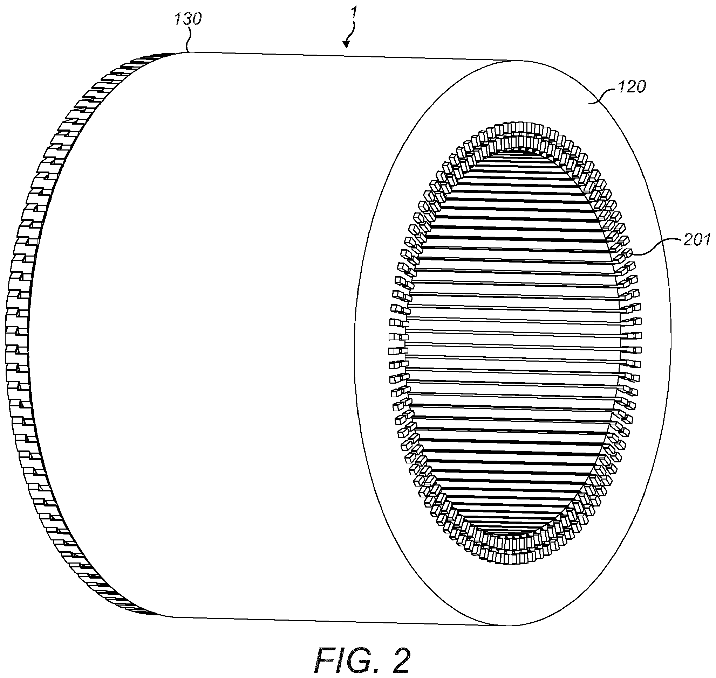

Figure 2 shows a view of a second end (120) of the stator assembly (1) of Figure 1. The second end (120) of the stator assembly (1) is shown for illustrative purposes, and a skilled person will appreciate that second ends (201) of the conductors (200) can be connected to one another in a conventional manner, as is known for multi-phase electrical machines of the type discussed herein, to create the necessary electrical paths and connections to inputs and/or outputs of the electrical machine. The present invention relates principally to the arrangement of the conductors shown at the first end (130) of the core assembly (1), where the legs of the conductors are connected to one another in a relatively uniform manner. One or more, a majority, or all, of the conductors of the array of conductor provided in the stator core may have substantially the same connection path between respective ends of pairs of legs of the conductors. i.e. the assembly may comprise a plurality of pairs of legs, with the an interconnection between the legs in each pair being repeated for any or all of the pairs of legs of the array provided in the stator core

The detail of connections of the conductors at the second end (120) of the assembly (1) are not discussed in any detail, since these can be connected in a conventional manner for known multi-phase electrical machines and so the detail of such connections at the second end (120) of the assembly (1) are not discussed in any greater detail herein in the interests of efficiency of the disclosure. The skilled reader will be able to implement these in a manner which is standard for multi-phase electrical machines.

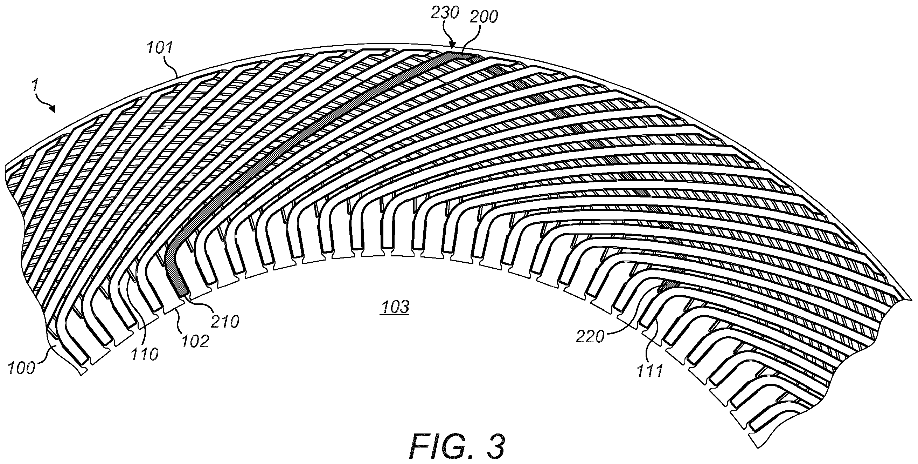

Figure 3 illustrates in more detail an example of a path of a selected conductor (200) of the array of conductors provided in the stator assembly (1). As an illustrative example, the conductor (200), has a first leg (210) extending into the page as shown in Figure 3, and a second leg (220) also extending into the page as shown in Figure 3. These legs are accommodated in slots of the stator core as described earlier. A bridge portion (230) is formed to connect the first leg (210) to the second leg (220). As can be appreciated from the figures, the bridge portion (230) extends in one or more planes which are preferably substantially perpendicular to the direction of extension of the legs (210 and 220) through the core, and preferably substantially perpendicular to the rotational axis X of the stator/machine.

The bridge portion (230) connects the first leg (210), which is arranged at a radially inner position in a first slot (110) in the core (100), to the second leg (220), which is arranged at a radially outer position in a second slot (111) of the core (100). As can be appreciated from Figure 3, in order for this electrical path to be created by the bridge portion (230) it must pass along a path which, as seen in the figure, passes over a first set of conductors and then under a second set of conductors. Otherwise stated, the path is such that a first plurality of conductors are disposed between the bridge portion (230) and the core (100) over a first part of its path between the first slot (110) and the second slot (111), while over a second part of its path, the bridge portion (230) of the conductor (200) passes between a second array of conductors and the core (100). Further detail of how this may be achieved will be described in relation to later figures.

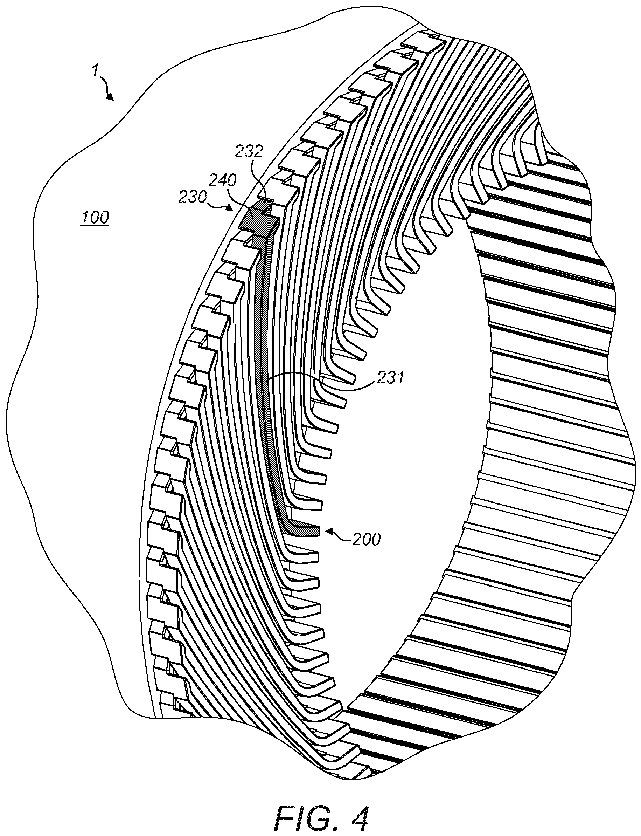

Figure 4 illustrates in a perspective view of the conductor (200) of Figure 3, one way in which a longitudinally extending portion (240) of the bridge portion (230) of the conductor (200) can be provided. As will become clear in later figures, the longitudinally extending portion (240) can be provided in the form of a step, which connects a first part (231) of the bridge portion to a second part (232) of the bridge portion (230). The longitudinally extending portion (240) is preferably provided at an outer-most radial position of the bridge portion (230). The first part (231) of the bridge portion (230) passes over a first array of bridge portions of conductors of the assembly, while the second part (232) of the bridge portion (230) passes under a second array of conductors of the assembly, such that the second part (232) is disposed between the core (100) and the second array of conductors. Similarly, the first array of conductors passes between the first part (231) of the bridge portion (230) and the core (100).

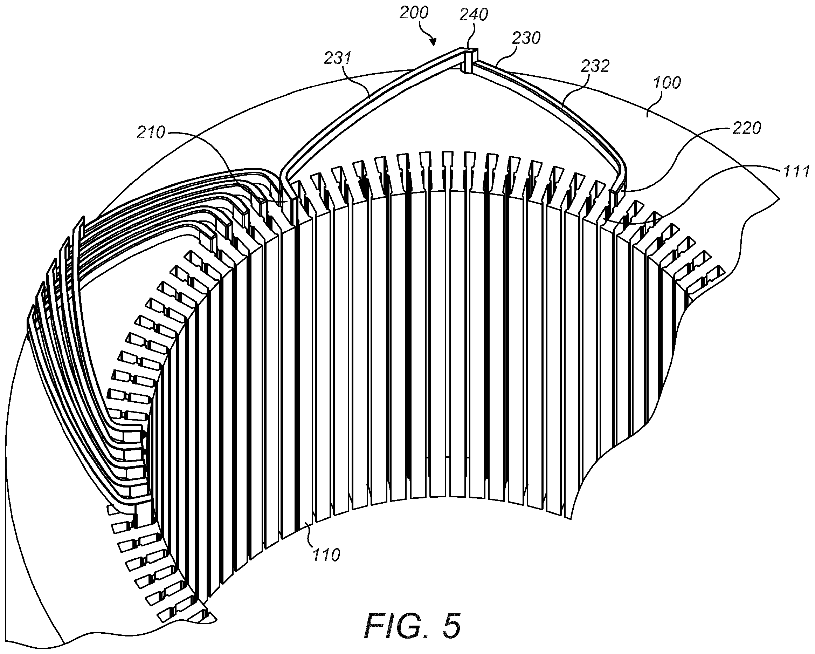

As can be appreciated when viewing Figure 5, and the earlier figures, one or more or each of the conductors (200) of the array of conductors provided in the core can have a substantially similar or identical form or describe a substantially identical path, but a path which is displaced around the core by one slot distance relative to an adjacent conductor. Preferably, each or all of the conductors in the array has a substantially identical form.

Figure 5 shows a subset of the conductors of the assembly, so that it can be seen more clearly how the bridge portion (230) permits the electrical path to be created between the first leg (210) of the conductor (200), and the second leg (220) of the conductor (200). The bridge portion (230) comprises a first part (231), and a second part (232). The first part (231) preferably extends in a first radially outward direction relative to, and in a first circumferential direction about, the core (100). Conversely, second part (232) of the bridge portion (230) extends in a radially inward direction, and also in the first circumferential direction around the core (100). More preferably, the first part (231) extends further in a radial direction than the second part (232) such that the first leg (210) can be located in a radially inner location it its respective slot (110), while the second leg (220) can be located in a radially outer position in its respective slot (111). As shown in Figure 5, it is preferable that the longitudinally extending portion (240) is located at a radially outermost area of the bridge portion (230). In this way, the longitudinal change in path of the bridge portion (230) occurs at or adjacent to its radially outermost point. It will be appreciated that this is necessary in order for the bridge portion (230) to pass over a sufficient number of further conductors, and then under a sufficient number of further conductors in order to reach the radially inner position of the leg (220) in slot (111).

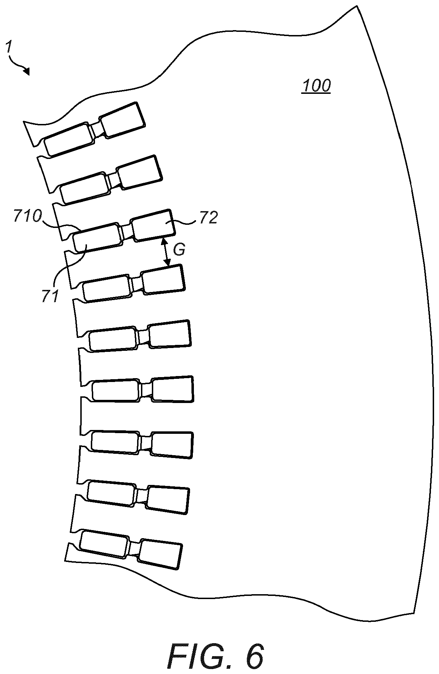

Figure 6 shows an end view or cross-section, through the core assembly (1) of the earlier figures.

The required size of the slot (710) is defined by electromagnetic considerations and so variations to the cross-sectional dimensions of the conductors within the slots are limited. To make the most efficient use of the slots to create electrical currents and the desired resulting electromagnetic fluxes in the core, an optimised design of the conductors may provide a greater conductor cross-section in the end sections of the windings present in the "overhang" section and a smaller cross-section when passing through the core. This is to reduce electrical resistance and heat losses due to resistance in the sections of the conductors outside of the slots of the core (100). To date, the small slot-size in the core has typically made it impractical to use materials other than copper. Aluminium has been considered, but is not typically suitable for a high-efficiency generator stators due its reduced electrical conductivity compared to copper. However, an increase in cross-section of the end windings in the "overhang" section outside of the slots in the core (100) could reduce the electrical resistance of the overall windings and may permit the use of aluminium windings in place of copper windings. This could achieve a significant weight reduction, which is particularly beneficial in aerospace applications, where weight is at a premium.

The conductors and methods of forming and/or assembly of the conductors described herein, further allow the potential for optimisation of the cross-sections of the legs of the conductors of the assembly (1). As can be seen in Figure 6, it is possible to arrange one or more of the legs (71) in the inner position(s) in the slots (710) of the core (100) to have a different aspect ratio to one or more of the legs (72) arranged in the radially outer position(s) in the slots (710). As illustrated, one or more legs (72) located in an outer radial position in the slot (710) may have a relatively wider circumferential dimension, and/or may have a shorter radial dimension, when compared to the conductors in the inner radial positions. Conversely, the leg (71) located at the radially inner position in the slot (710) may have a greater radial dimension relative to the outer leg (72) and/or may have a smaller circumferential dimension than outer leg (72). The provision of this radially outer array of legs being wider in the circumferential direction than the radially inner array can allow a sufficient amount of current to pass through the conductor, for a chosen conductor cross sectional area, while allowing a reduced outer diameter of the slot (710). This can allow the overall outer diameter of the core to be reduced. This in turn can reduce the overall weight of the stator assembly, since the outer diameter of the core can be reduced by the same amount as the reduction in radial dimension of the outer conductor (72) provided by the described change in aspect ratio. Even greater differences in aspect ratio than that shown can be provided. However, there is a limit to the benefit which may be obtained, since it is preferable to avoid reducing the circumferential gap (G) between adjacent slots. This is because reducing the gap (G) can limit the magnetic flux which can pass through the core through the gap (G) between adjacent conductors, and this can limit the overall efficiency of the generator. Therefore, it can be beneficial to provide one or more conductors in the assembly, which has a first leg having a first aspect ratio, and a second leg having a second aspect ratio. The differences between the aspect ratios of the first and second legs can be provided as described above for at least one, preferably, a plurality and optionally for all conductors in the windings of the stator assembly (1).

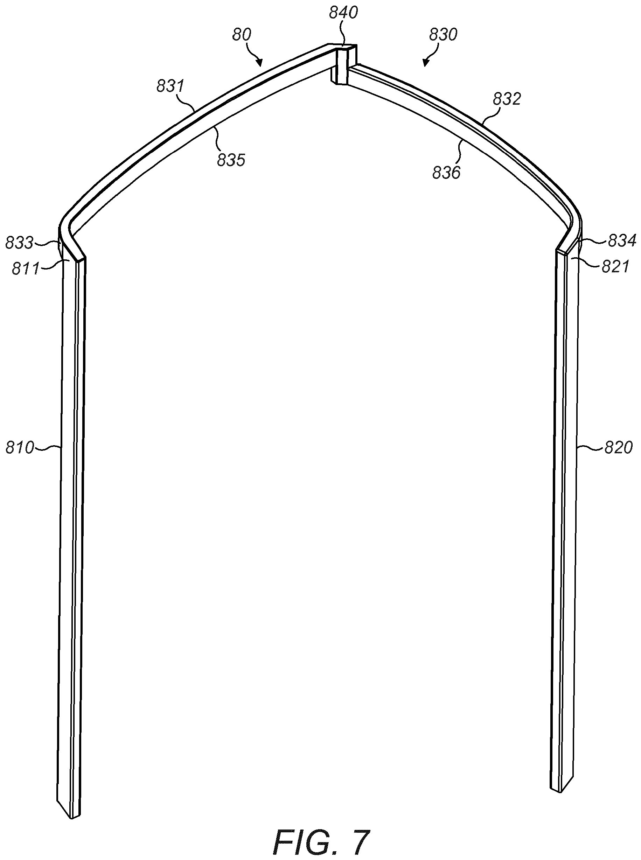

Figure 7 shows an individual conductor (80) of the array of conductors shown in the assembly of the earlier figures. As will be appreciated from the earlier description, the conductor (80) can therefore be provided with any or all of the following features. The conductor (80) may have a first leg (810) and a second leg (820). The first leg (810) may be configured to be disposed in a radially inner position in a first slot of the core (100). The second leg (820) may be configured to be disposed in a radially outer position in a second slot of the core (100). The bridge portion (830) of the conductor (80) can be configured to provide an electrical path between first end (811) of the first leg (810) and the first end (821) of the second leg (820). A first part (831) of the bridge portion (830) may be configured to provide a conductive path extending through a first radial distance and the first circumferential distance relative to the core (100) when assembled. The second part (832) of the bridge portion (830) can be arranged to provide a conductive path over a second radial distance and a second circumferential distance to connect the second leg (820) to the first part (831) of the bridge portion (830). The radial distance provided by the second part (832) may be less than the radial distance covered by the first part (831). One or both of the first and second part (831 and 832) of the bridge portion (830) may comprise a first curved sub-part (833, 834) which has a tighter radius of curvature than a second sub-part (835, 836). The first sub-part may be located adjacent the leg and/or between a second sub-part. The second sub-part may be located distal from the leg. In this manner, the conductor can follow a first path away from leg (810) that has a first relatively tight curve (833), which connects to a straighter and less curved portion (835) extending to a radially outward extent of the conductor at a longitudinally extending portion (840). The longitudinally extending portion (840) of the bridge portion (830) can be connected to a curved sub-part (836), which has a lesser radius of curvature than a further curved sub-part (834) located adjacent a further leg (820), which preferably connects to the first end (821) of the second leg (820). As will be appreciated, any or all of the above features can help in facilitating the reduced extent of the overhang portion of the conductors outside of the core (100), as illustrated in the assembly of the earlier figures.

The conductor of Figure 7 can advantageously be formed by a casting method. As anyone skilled in the manufacturing methods such as casting will appreciate, in light of the teaching in the present application, a mould can be provided with a cavity which provides a negative form of the conductor shown in Figure 7, and molten material can be poured into the mould to form the conductor. This is very different from conventional methods of forming conductors for multi-phase generators of the kind described herein, since the conductors have traditionally been formed by bending or brazing wire conductors to form the desired electrical parts. Those conductors have also conventionally been located in the core by inserting them, and then bending and forming the necessary radial, circumferential and longitudinal changes in path to connect conductor parts passing through one slot of the stator core to another, after the conductors have at least been partially inserted into the core.

In manufacturing methods provided in accordance with the invention, the paths required in the bridge portion (830, 230) are provided when the conductor is cast and then the conductors can be provided into the core with the bridge portion in a pre-formed state. This can speed up the overall manufacturing process, because plastic bending, forming, and brazing of conductors at the first end of assembly (1) is not necessary when the necessary form has been pre-cast in the conductors (200, 80).

As will be appreciated when considering the conductor of Figure 7, in view of the item being pre-cast with substantially perpendicular connections between the first and/or second legs and the bridge portion, it is possible during the design of the mould, to choose the same, different, or variable cross-sections of the conductor in the first and second legs, and in any part of the bridge portion (820, 230) of the conductors. This can allow the design of the conductors to be optimised for the desired electrical performance characteristics. Therefore, the cross-sections of any of the sections of the conductor (i.e. first and second legs, bridge portion and first and second or sub-parts parts thereof) illustrated in Figure 7, can be bigger or smaller than any of the other sections. Their aspect ratio can also be varied as described in relation to Figure 6 as necessary or desirable for improved electrical performance and/or reduced overall resistance of the overall conductor.

Methods of assembling an array of conductors into the core (100) have been considered. It is envisaged that one method of assembly enabled by aspects of the invention is as follows.

Prior to conception of the present invention, it would not be obvious how an array of conductors for a stator could be pre-formed or pre-assembled prior to insertion into the stator core (100). This is because, conventionally, the substantially straight parts of the conductors are inserted into the slots of the stator core and then the necessary connections formed either by plastically bending the conductors during winding, after winding and/or by brazing additional connections and/or conductor sections in place to form end connections or bridge portions.

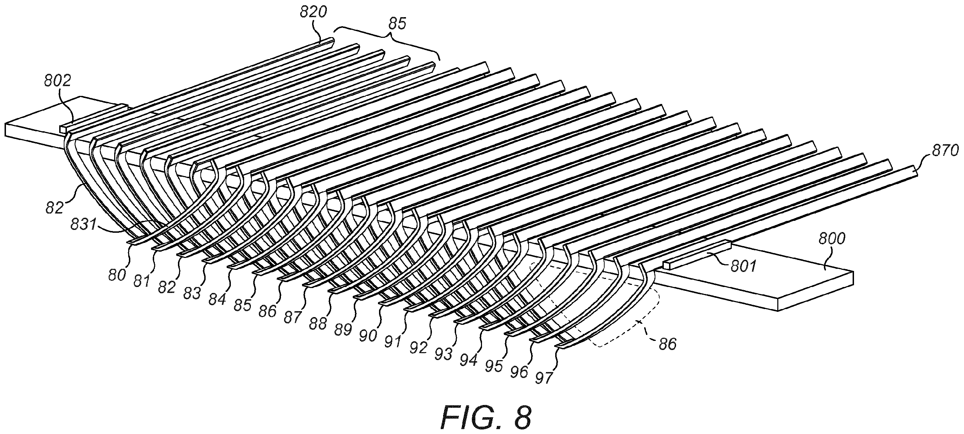

However, with the pre-cast conductors provided by the present disclosure, one method of assembly is as follows. Firstly, as shown in Figure 8, the array of conductors (80 to 97), for example, can be laid out in a non-circular array as shown in Figure 8. As will be appreciated, the number of conductors shown in Figure 8 is not necessarily sufficient to fill the illustrated stator (100) and more may be required, but this is merely shown as an example of the type of linear or non-circular arrangement of the conductors which may be employed. As can be seen, the conductors can be laid out in a preferably substantially linear array, with the respective sets of first and second legs of the conductors being arranged in substantially parallel planes. These may be laid out on a substantially flexible jig or mat (800). The jig or mat (800) may be provided with one or more guides (801, 802) for aligning any or all of the legs (810, 820) of the conductors (80 to 97). When arranged in this linear array, it is easier for an operator to lay the conductors adjacent to one another sequentially, to provide the necessary overlap of first parts of the bridge portion (831, 832) over one another as described in relation to earlier figures and as shown in Figure 8.

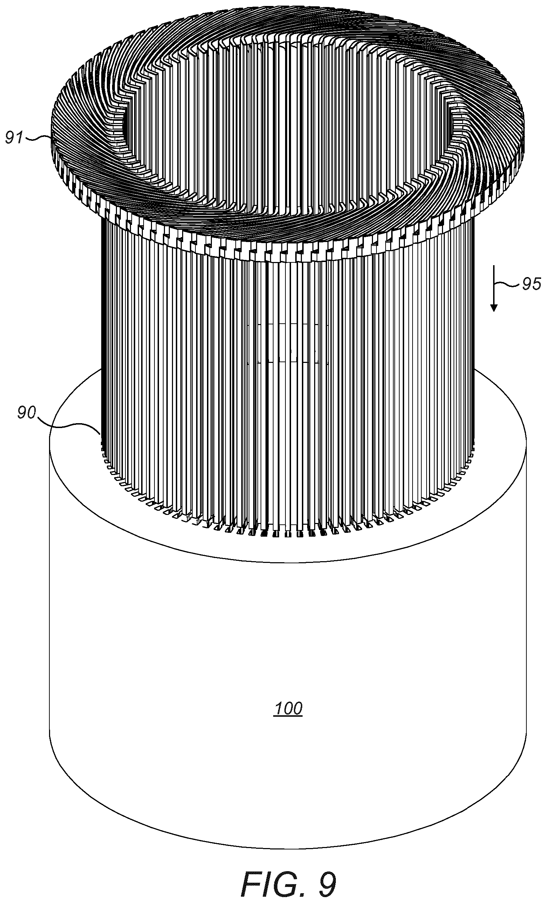

Once a sufficient number of conductors (80) is arranged in this substantially linear array, the flexible jig or mat (800) can be used to "roll" the array around into the substantially cylindrical form shown by the circular array of Figure 9.

As will be appreciated, the substantially linear array in Figure 8 need not necessarily be linear, the principal consideration is that first and second ends of the array are not in connection nor do they overlap with one another to provide overlapping conductors around the full circumference, until such time as the full array of conductors is in place. A further step in the pre-configuration of the array prior to insertion into the core, is the insertion of a first plurality of the second legs, for example as shown by group 85 of legs in Figure 8, around and into the space indicated by item 86 in Figure 8, to close the circular array.

Once the full cylindrical array is formed as shown in Figure 9, and the overlap of second legs (85) into region (86) is provided, then distal ends (90) of the legs of the array can be inserted into the slots in the core (100) as shown in Figure 9. Then the array can be inserted into the core (100) in a direction of arrow (95). As will be appreciated, the jig or mat (800), provided in the general form of a configurable support may be held in place around the array (91) to provide it with support before and during insertion into the core (100), although this is not shown in Figure 9 for clarity. Further jigs or supports may be required to hold the numerous legs in their required relative positions prior to insertion into the core to facilitate the final assembly step. As will be appreciated, once the array (91) has been inserted to its full extent in the direction of arrow (95), then the assembly illustrated in Figure 1 will be provided.

As will be appreciated, the methods of manufacture and assembly, the conductors and the state of assembly of the present invention can provide a more efficiently manufactured, or more efficiently configured generator resulting in weight, material and efficiency saving and so have numerous advantages, as can be realised by any or all of the features described above and herein and illustrated in the figures.

## Claims

1. A method of manufacturing a multi-phase electrical machine, the method comprising the steps of:
casting in a mould a conductor (200) for a winding of the stator of the multi-phase electrical machine, the conductor being cast having first and second substantially parallel legs (210, 220) and a bridge portion (230) extending, in a direction substantially perpendicular to the legs, between respective first ends of the first and second legs, to electrically connect the first and second legs, the bridge portion being cast so as to comprise: a first bridge part (231) extending in a first plane substantially perpendicular to the first and second legs, from a first end of the first leg; a second bridge part (232), extending from a first end of the second leg, in a second plane substantially perpendicular to the first and second legs, to connect the second leg to the first bridge part; and a longitudinally extending portion (240) extending longitudinally to the stator and connecting the first bridge part and the second bridge part;
removing the conductor from the mould; and
inserting the first and second legs of the conductor into slots (110, 111) in a stator core (100) of the multi-phase electrical machine, such that at least a portion of the bridge portion lies in a plane substantially parallel with an end face of the core, the legs of the conductor being cast so as to extend within the first and second slots of the stator core, from the bridge portion located at a first longitudinal end (130) of the stator core, to a second longitudinal end (120) of the stator core.

2. A method according to claim 1, wherein:
the at least one conductor (200) is cast such that the bridge portion (230) of the conductor comprises a greater cross-sectional area than at least one of the first and/or second leg (210, 220).

3. A method according to claim 1 or claim 2, wherein:
the at least one conductor (200) is cast such that a cross-section of the first leg (210) has a different, preferably greater, dimension in a radial direction of the stator assembly (1), than that of the second leg (220).

4. A method according to any preceding claim, wherein:
the at least one conductor (200) is cast such that a cross section of the second leg (220) has a different, preferably greater, dimension in a circumferential direction of the stator assembly (1) than that of the first leg (210).

5. A method according to any preceding claim, further comprising the steps of:
arranging a plurality of the cast conductors (80-97) in a non-circular array, such that in the array, a first bridge part (231) of a bridge portion (230) of a first conductor in the array overlaps a second bridge part (232) of a bridge portion of a second conductor placed adjacent the first conductor in the array, the legs (210, 220) of the first and second conductors extending substantially parallel to one another;

6. A method according to claim 5, further comprising the steps of:
wrapping the non-circular array into a substantially circular array, with the first and/or second respective legs (210, 220) of the conductors (80-97) defining first and/or second substantially circular arrays; and
inserting legs of the conductors into slots (110, 111) in a core (100) of the stator.

7. A method according to any of the preceding claims, further comprising simultaneously inserting legs (210, 220) of a plurality of the conductors (80-97) into a plurality of corresponding slots (110, 111) in the stator of the multi-phase electrical machine.

8. A method according to claim 1, the longitudinally extending portion (240) of the bridge portion (230) of the at least one conductor being provided in the form of a step portion (240) extending longitudinally to the stator (100) and connecting the first bridge part (231) and the second bridge part (232).

9. A method according to any of the preceding claims, wherein the bridge portion (230) of the conductor (200) is configured to provide an electrical path between a first end of the first leg (210) and the first end of the second leg (220), such that the first leg is disposed in a radially inner position in a first slot (110) of the core (100) and the second leg is disposed in a radially outer position in a second slot (111) of the core.

10. A method according to any of the preceding claims, wherein the at least one conductor (200) is cast such that:
the first part (231) of the bridge portion (230) is configured to provide a conductive path extending through a first radial distance and a first circumferential distance relative to the core (100);
the second part (232) of the bridge portion is arranged to provide a conductive path over a second radial distance and a second circumferential distance to connect the second leg (220) to the first part of the bridge portion; and
the radial distance provided by the second part is less than the radial distance provided by the first part.

11. A method according to any preceding claim, wherein the at least one conductor (80) is cast such that:
at least one of the first or second parts (831, 832) of the bridge portion (830) has a first sub-part (833, 834) which has a tighter radius of curvature in a plane perpendicular to a longitudinal axis of the stator (100) than a second sub-part (835, 836), the first sub-part being located radially inward of the second sub-part.

12. A method according to any preceding claim, wherein at least one slot (710) in the array of slots in the stator core (100) is arranged to provide a fluid cooling channel between the first and second conductor legs (71, 72) in the channel.

13. A method according to claim 12, wherein the channel comprises at least one projection configured to retain the first and second legs (71, 72) in the channel in separation to allow fluid to pass longitudinally along the channel between the first and second legs in the channel.

14. A method according to any preceding claim, further comprising arranging a plurality of conductors (200) of the stator assembly such that:
for at least one first conductor in the array, a bridge portion (230) of a second conductor in the array passes between a first part (231) of the bridge portion (230) of the first conductor and the core (100); and
a second part (232) of the bridge portion (230) of the first conductor passes between a first part (231) of a bridge portion (230) of a third conductor and the core.

15. A stator (1) for a multi-phase electrical machine, comprising:
a stator core (100) having a substantially annular cross section and having a plurality of slots (110, 111) extending longitudinally in a direction of a rotation axis of the stator, for receiving conductors to form magnetic windings of the stator; and
a substantially circular array of cast conductors (200), cast conductors of the array comprising:
a first substantially straight leg (210) and a second substantially straight leg (220) extending substantially parallel to one another within first and second slots (110, 111) of the stator core; and
a bridge portion (230), comprising:
a first bridge part (231) extending in a first plane substantially perpendicular to the first and second legs, from a first end of the first leg, to form a part of an electrical connection between the first and second legs;
a second bridge part (232), extending from a first end of the second leg, in a second plane substantially perpendicular to the first and second legs, to connect the second leg to the first bridge part; and
a step portion (240) extending longitudinally to the stator and
connecting the first bridge part and the second bridge part;
wherein the first substantially straight leg and the second substantially straight leg extend within the first and second slots of the stator core from the bridge portion at a first longitudinal end (130) of the core, to a second longitudinal end (120) of the stator core.

16. A stator (1) according to claim 15, wherein conductors (200) of the array of conductors are arranged such that:
for at least one first conductor (200) in the array, a bridge portion (230) of at least one second conductor in the array passes between a first part (231) of the bridge portion (230) of the first conductor and the core (100); and
a second part (232) of the bridge portion of the first conductor passes between a first part (231) of a bridge portion (230) of at least one third conductor and the core.

17. A stator (1) according to claim 15 or claim 16, wherein conductors (200) of the array of cast conductors are arranged such that the bridge portion (230) of the conductor comprises a greater cross-sectional area than at least one of the first and/or second leg (210, 220).

18. A stator (1) according to any of claims 15 to 17, wherein:
the at least one conductor (200) is pre-cast such that a cross-section of the first leg (210) has a different, preferably greater, dimension in a radial direction of the stator assembly, than that of the second leg (220).

19. A stator (1) according to any of claims 15 to 18, wherein:
the at least one conductor (200) is pre-cast such that a cross section of the second leg (220) has a different, preferably greater, dimension in a circumferential direction of the stator assembly than that of the first leg (210).

## Patentansprüche

1. Verfahren zur Herstellung einer mehrphasigen elektrischen Maschine, wobei das Verfahren die folgenden Schritte umfasst:
Gießen eines Leiters (200) für eine Wicklung des Stators der mehrphasigen elektrischen Maschine in eine Form, wobei der gegossene Leiter ein erstes und ein zweites Bein (210, 220), die im Wesentlichen parallel sind, und einen Brückenabschnitt (230) aufweist, der sich in eine Richtung im Wesentlichen senkrecht zu den Beinen zwischen den jeweiligen ersten Enden des ersten und des zweiten Beins erstreckt, um das erste und das zweite Bein elektrisch zu verbinden, wobei der Brückenabschnitt so gegossen ist, dass er aufweist:
ein erstes Brückenteil (231), das sich in einer ersten Ebene im Wesentlichen senkrecht zu dem ersten und dem zweiten Bein von einem ersten Ende des ersten Beins aus erstreckt; ein zweites Brückenteil (232), das sich von einem ersten Ende des zweiten Beins aus in einer zweiten Ebene im Wesentlichen senkrecht zu dem ersten und dem zweiten Bein erstreckt, um das zweite Bein mit dem ersten Brückenteil zu verbinden; und einen sich längs erstreckenden Abschnitt (240), der sich längs zum Stator erstreckt und das erste Brückenteil und das zweite Brückenteil verbindet;
Entfernen des Leiters aus der Form; und
Einsetzen des ersten und des zweiten Beins des Leiters in Spalte (110, 111) in einem Statorkern (100) der mehrphasigen elektrischen Maschine, so dass mindestens ein Abschnitt des Brückenabschnitts in einer Ebene im Wesentlichen parallel zu einer Stirnseite des Kerns liegt, wobei die Beine des Leiters so gegossen sind, dass sie sich in dem ersten und dem zweiten Spalt des Statorkerns von dem Brückenabschnitt, der sich an einem ersten Längsende (130) des Statorkerns befindet, zu einem zweiten Längsende (120) des Statorkerns erstrecken.

2. Verfahren nach Anspruch 1, wobei:
der mindestens eine Leiter (200) so gegossen ist, dass der Brückenabschnitt (230) des Leiters einen größeren Querschnittsbereich als das erste und/oder das zweite Bein (210, 220) aufweist.

3. Verfahren nach Anspruch 1 oder Anspruch 2, wobei:
der mindestens eine Leiter (200) so gegossen ist, dass ein Querschnitt des ersten Beins (210) eine andere, vorzugsweise größere Ausmessung in einer radialen Richtung der Statoranordnung (1) als das zweite Bein (220) aufweist.

4. Verfahren nach einem der vorstehenden Ansprüche, wobei:
der mindestens eine Leiter (200) so gegossen ist, dass ein Querschnitt des zweiten Beins (220) eine andere, vorzugsweise größere Ausmessung in einer Umfangsrichtung der Statoranordnung (1) als das erste Bein (210) aufweist.

5. Verfahren nach einem der vorstehenden Ansprüche, das ferner die folgenden Schritte umfasst:
Anordnen einer Vielzahl von gegossenen Leitern (80-97) in einem nicht kreisförmigen Array, so dass in dem Array ein erstes Brückenteil (231) eines Brückenabschnitts (230) eines ersten Leiters in dem Array ein zweites Brückenteil (232) eines Brückenabschnitts eines zweiten Leiters überlagert,
der angrenzend zu dem ersten Leiter in dem Array angeordnet ist, wobei sich die Beine (210, 220) des ersten und des zweiten Leiters im Wesentlichen parallel zueinander erstrecken.

6. Verfahren nach Anspruch 5, das ferner die folgenden Schritte umfasst:
Wickeln des nicht kreisförmigen Arrays zu einem im Wesentlichen kreisförmigen Array, wobei das erste und/oder das zweite Bein (210, 220) der Leiter (80-97) erste und/oder zweite im Wesentlichen kreisförmige Arrays definieren; und
Einsetzen der Beine der Leiter in Spalte (110, 111) in einem Kern (100) des Stators.

7. Verfahren nach einem der vorstehenden Ansprüche, das ferner umfasst:
gleichzeitiges Einsetzen von Beinen (210, 220) einer Vielzahl von Leitern (80-97) in eine Vielzahl von entsprechenden Spalten (110, 111) im Stator der mehrphasigen elektrischen Maschine.

8. Verfahren nach Anspruch 1, wobei der sich längs erstreckende Abschnitt (240) des Brückenabschnitts (230) des mindestens einen Leiters in Form eines Stufenabschnitts (240) vorgesehen ist, der sich längs zum Stator (100) erstreckt und das erste Brückenteil (231) und das zweite Brückenteil (232) verbindet.

9. Verfahren nach einem der vorstehenden Ansprüche, wobei der Brückenabschnitt (230) des Leiters (200) so ausgebildet ist, dass er einen elektrischen Pfad zwischen einem ersten Ende des ersten Beins (210) und dem ersten Ende des zweiten Beins (220) bereitstellt, so dass das erste Bein in einer radial innere Position in einem ersten Spalt (110) des Kerns (100) angeordnet ist und das zweite Bein in einer radial äußeren Position in einem zweiten Spalt (111) des Kerns angeordnet ist.

10. Verfahren nach einem der vorstehenden Ansprüche, wobei der mindestens eine Leiter (200) so gegossen ist, dass:
das erste Teil (231) des Brückenabschnitts (230) so ausgebildet ist, dass es einen leitenden Pfad bereitstellt, der sich durch einen ersten Radialabstand und einen ersten Umfangsabstand relativ zu dem Kern (100) erstreckt;
das zweite Teil (232) des Brückenabschnitts so angeordnet ist, dass es einen leitenden Pfad über einen zweiten Radialabstand und einen zweiten Umfangsabstand bereitstellt, um das zweite Bein (220) mit dem ersten Teil des Brückenabschnitts zu verbinden; und
der durch das zweite Teil bereitgestellte Radialabstand geringer ist als der durch das erste Teil bereitgestellte Radialabstand.

11. Verfahren nach einem der vorstehenden Ansprüche, wobei der mindestens eine Leiter (80) so gegossen ist, dass
das erste und/oder das zweite Teil (831, 832) des Brückenabschnitts (830) ein erstes Unterteil (833, 834) aufweist, das einen engeren Krümmungsradius in einer Ebene senkrecht zu einer Längsachse des Stators (100) als ein zweites Unterteil (835, 836) aufweist, wobei sich das erste Unterteil radial innerhalb des zweiten Unterteils befindet.

12. Verfahren nach einem der vorstehenden Ansprüche, wobei mindestens ein Spalt (710) in dem Array aus Spalten im Statorkern (100) so angeordnet ist, dass er einen Fluidkühlungskanal zwischen dem ersten und dem zweiten Leiterbein (71, 72) in dem Kanal bereitstellt.

13. Verfahren nach Anspruch 12, wobei der Kanal mindestens einen Vorsprung aufweist, der so ausgebildet ist, dass er das erste und das zweite Bein (71, 72) in dem Kanal getrennt hält, damit das Fluid längs entlang des Kanals zwischen dem ersten und dem zweiten Bein im Kanal fließen kann.

14. Verfahren nach einem der vorstehenden Ansprüche das ferner das Anordnen einer Vielzahl von Leitern (200) der Statoranordnung umfasst, so dass:
für mindestens einen ersten Leiter im Array ein Brückenabschnitt (230) des zweiten Leiters in dem Array zwischen einem ersten Teil (231) des Brückenabschnitts (230) des ersten Leiters und dem Kern (100) verläuft; und
ein zweites Teil (232) des Brückenabschnitts (230) des ersten Leiters zwischen einem ersten Teil (231) des Brückenabschnitts (230) eines dritten Leiters und dem Kern verläuft.

15. Stator (1) für eine mehrphasige elektrische Maschine, der aufweist:
einen Statorkern (100) mit einem im Wesentlichen ringförmigen Querschnitt und einer Vielzahl von Spalten (110, 111), die sich längs in einer Richtung einer Drehachse des Stators erstrecken, um die Leiter zur Bildung magnetischer Wicklungen des Stators aufzunehmen; und
ein im Wesentlichen kreisförmiges Array aus gegossenen Leitern (200), wobei die gegossenen Leiter des Arrays aufweisen:
ein erstes im Wesentlichen gerades Bein (210) und ein zweites im Wesentlichen gerades Bein (220), die sich im Wesentlichen parallel zueinander in einem ersten Spalt und einem zweiten Spalt (110, 111) des Statorkerns erstrecken; und
einen Brückenabschnitt (230), der aufweist:
ein erstes Brückenteil (231), das sich in einer ersten Ebene im Wesentlichen senkrecht zu dem ersten und dem zweiten Bein von einem ersten Ende des ersten Beins aus erstreckt, um einen Teil einer elektrischen Verbindung zwischen dem ersten und dem zweiten Bein zu bilden;
ein zweites Brückenteil (232), das sich von einem ersten Ende des zweiten Beins aus in einer zweiten Ebene im Wesentlichen senkrecht zu dem ersten und dem zweiten Bein erstreckt, um das zweite Bein mit dem ersten Brückenteil zu verbinden; und
einen Stufenabschnitt (240), der sich längs zum Stator erstreckt
und das erste Brückenteil und das zweite Brückenteil verbindet;
wobei das erste im Wesentlichen gerade Bein und das zweite im Wesentlichen gerade Bein sich innerhalb des ersten und des zweiten Spalts des Statorkerns von dem Brückenabschnitt aus an einem erste Längsende (130) des Kerns zu einem zweiten Längsende (120) des Statorkerns erstrecken.

16. Stator (1) nach Anspruch 15, wobei Leiter (200) des Arrays aus Leitern so angeordnet sind, dass:
für mindestens einen ersten Leiter (200) in dem Array ein Brückenabschnitt (230) von mindestens einem zweiten Leiter in dem Array zwischen einem ersten Teil (231) des Brückenabschnitts (230) des ersten Leiters und dem Kern (100) verläuft; und
ein zweites Teil (232) des Brückenabschnitts des ersten Leiters zwischen einem ersten Teil (231) eines Brückenabschnitts (230) von mindestens einem dritten Leiter und dem Kern verläuft.

17. Stator (1) nach Anspruch 15 oder Anspruch 16, wobei Leiter (200) des Arrays aus gegossenen Leitern so angeordnet sind, dass der Brückenabschnitt (230) des Leiters einen größeren Querschnittsbereich als das erste und/oder das zweite Bein (210, 220) aufweist.

18. Stator (1) nach einem der Ansprüche 15 bis 17, wobei:
der mindestens eine Leiter (200) so vorgegossen ist, dass ein Querschnitt des ersten Beins (210) eine andere, vorzugweise größere Ausmessung in einer radialen Richtung der Statoranordnung als das zweite Bein (220) aufweist.

19. Stator (1) nach einem der Ansprüche 15 bis 18, wobei:
der mindestens eine Leiter (200) so vorgegossen ist, dass ein Querschnitt des zweiten Beins (220) eine andere, vorzugweise größere Ausmessung in einer Umfangsrichtung der Statoranordnung als das erste Bein (210) aufweist.

## Revendications

1. Procédé de fabrication d'une machine électrique polyphasée, le procédé comprenant les étapes de :
couler dans un moule un conducteur (200) pour un enroulement du stator de la machine électrique polyphasée, le conducteur coulé ayant des première et deuxième branches (210, 220) sensiblement parallèles et une portion de pont (230) s'étendant, dans une direction sensiblement perpendiculaire aux branches, entre des premières extrémités respectives des première et deuxième branches, pour connecter électriquement les première et deuxième branches, la portion de pont étant coulée de manière à comprendre : une première partie (231) de pont s'étendant dans un premier plan sensiblement perpendiculaire aux première et deuxième branches, depuis une première extrémité de la première branche ; une deuxième partie (232) de pont, s'étendant depuis une première extrémité de la deuxième branche, dans un deuxième plan sensiblement perpendiculaire aux première et deuxième branches, pour connecter la deuxième branche à la première partie de pont ; et une portion s'étendant longitudinalement (240), s'étendant longitudinalement vers le stator et connectant la première partie de pont et la deuxième partie de pont ;
retirer le conducteur du moule ; et
insérer les première et deuxième branches du conducteur dans des fentes (110, 111) dans un noyau (100) de stator de la machine électrique polyphasée, de sorte qu'au moins une portion de la portion de pont se trouve dans un plan sensiblement parallèle à une face d'extrémité du noyau, les branches du conducteur étant coulées de manière à s'étendre à l'intérieur des première et deuxième fentes du noyau de stator, depuis la portion de pont située à une première extrémité longitudinale (130) du noyau de stator, vers une deuxième extrémité longitudinale (120) du noyau de stator.

2. Procédé selon la revendication 1, dans lequel :
l'au moins un conducteur (200) est coulé de sorte que la portion de pont (230) du conducteur comprenne une section transversale plus grande qu'au moins une parmi la première et/ou la deuxième branche (210, 220).

3. Procédé selon la revendication 1 ou la revendication 2, dans lequel :
l'au moins un conducteur (200) est coulé de sorte qu'une section transversale de la première branche (210) ait une dimension différente, de préférence plus grande dans une direction radiale de l'ensemble stator (1), que celle de la deuxième branche (220).

4. Procédé selon l'une quelconque des revendications précédentes, dans lequel :
l'au moins un conducteur (200) est coulé de sorte qu'une section transversale de la deuxième branche (220) ait une dimension différente, de préférence plus grande, dans une direction circonférentielle de l'ensemble stator (1) que celle de la première branche (210).

5. Procédé selon l'une quelconque des revendications précédentes, comprenant en outre les étapes de :
agencer une pluralité de conducteurs (80-97) coulés dans un réseau non circulaire, de sorte que, dans le réseau, une première partie (231) de pont d'une portion de pont (230) d'un premier conducteur dans le réseau chevauche une deuxième partie (232) de pont d'une portion de pont d'un deuxième conducteur placé adjacent au premier conducteur dans le réseau, les branches (210, 220) des premier et deuxième conducteurs s'étendant sensiblement parallèlement l'une à l'autre.

6. Procédé selon la revendication 5, comprenant en outre les étapes de :
enrouler le réseau non circulaire en un réseau sensiblement circulaire, les première et/ou deuxième branches (210, 220) respectives des conducteurs (80-97) définissant des premier et/ou deuxième réseaux sensiblement circulaires ; et
insérer les branches du conducteurs dans des fentes (110, 111) dans un noyau (100) du stator.

7. Procédé selon l'une quelconque des revendications précédentes, comprenant en outre de
insérer simultanément les branches (210, 220) d'une pluralité des conducteurs (80-97) dans une pluralité de fentes (110, 111) correspondantes dans le stator de la machine électrique polyphasée.

8. Procédé selon la revendication 1, où la portion s'étendant longitudinalement (240) de la portion de pont (230) de l'au moins un conducteur est prévue sous la forme d'une portion (240) étagée s'étendant longitudinalement vers le stator (100) et connectant la première partie (231) de pont et la deuxième partie (232) de pont.

9. Procédé selon l'une quelconque des revendications précédentes, dans lequel la portion de pont (230) du conducteur (200) est configurée pour fournir un chemin électrique entre une première extrémité de la première branche (210) et la première extrémité de la deuxième branche (220), de sorte que la première branche soit disposée dans une position radialement intérieure dans une première fente (110) du noyau (100), et que la deuxième branche soit disposée dans une position radialement extérieure dans une deuxième fente (111) du noyau.

10. Procédé selon l'une quelconque des revendications précédentes, dans lequel l'au moins un conducteur (200) est coulé de sorte que :
la première partie (231) de la portion de pont (230) soit configurée pour fournir un chemin conducteur s'étendant à travers une première distance radiale et une première distance circonférentielle par rapport au noyau (100) ;
la deuxième partie (232) de la portion de pont soit agencée pour fournir un chemin conducteur sur une deuxième distance radiale et une deuxième distance circonférentielle pour connecter la deuxième branche (220) à la première partie de la portion de pont ; et
la distance radiale fournie par la deuxième partie soit inférieure à la distance radiale fournie par la première partie.

11. Procédé selon l'une quelconque des revendications précédentes, dans lequel l'au moins un conducteur (80) est coulé de sorte que :
au moins l'une des première ou deuxième parties (831, 832) de la portion de pont (830) a une première sous-partie (833, 834) qui a un rayon de courbure plus serré dans un plan perpendiculaire à un axe longitudinal du stator (100) qu'une deuxième sous-partie (835, 836), la première sous-partie étant située radialement à l'intérieur de la deuxième sous-partie.

12. Procédé selon l'une quelconque des revendications précédentes, dans lequel au moins une fente (710) dans le réseau de fentes dans le noyau (100) de stator est agencée pour fournir un canal de refroidissement de fluide entre les première et deuxième branches (71, 72) de conducteur dans le canal.

13. Procédé selon la revendication 12, dans lequel le canal comprend au moins une saillie configurée pour retenir les première et deuxième branches (71, 72) dans le canal de manière séparée, pour permettre à un fluide de passer longitudinalement le long du canal entre les première et deuxième branches dans le canal.

14. Procédé selon l'une quelconque des revendications précédentes, comprenant en outre d'agencer une pluralité de conducteurs (200) de l'ensemble stator de sorte que :
pour au moins un premier conducteur dans le réseau, une portion de pont (230) d'un deuxième conducteur dans le réseau passe entre une première partie (231) de la portion de pont (230) du premier conducteur et le noyau (100) ; et
une deuxième partie (232) de la portion de pont (230) du premier conducteur passe entre une première partie (231) d'une portion de pont (230) d'un troisième conducteur et le noyau.

15. Stator (1) pour une machine électrique polyphasée, comprenant :
un noyau (100) de stator ayant une section transversale sensiblement annulaire et ayant une pluralité de fentes (110, 111) s'étendant longitudinalement dans une direction d'un axe de rotation du stator, pour recevoir des conducteurs afin de former des enroulements magnétiques du stator ; et
un réseau sensiblement circulaire de conducteurs (200) coulés, les conducteurs coulés du réseau comprenant :
une première branche (210) sensiblement droite et une deuxième branche (220) sensiblement droite s'étendant sensiblement parallèlement l'une à l'autre à l'intérieur de première et deuxième fentes (110, 111) du noyau de stator ; et
une portion de pont (230), comprenant :
une première partie (231) de pont s'étendant dans un premier plan sensiblement perpendiculaire aux première et deuxième branches, depuis une première extrémité de la première branche, pour former une partie d'une connexion électrique entre les première et deuxième branches ;
une deuxième partie (232) de pont, s'étendant depuis une première extrémité de la deuxième branche, dans un deuxième plan sensiblement perpendiculaire aux première et deuxième branches, pour connecter la deuxième branche à la première partie de pont ; et
une portion (240) étagée s'étendant longitudinalement vers le stator et connectant la première partie de pont et la deuxième partie de pont ;
dans lequel la première branche sensiblement droite et la deuxième branche sensiblement droite s'étendent à l'intérieur des première et deuxième fentes du noyau de stator, depuis la portion de pont à une première extrémité longitudinale (130) du noyau vers une deuxième extrémité longitudinale (120) du noyau de stator.

16. Stator (1) selon la revendication 15, dans lequel des conducteurs (200) du réseau de conducteurs sont agencés de sorte que :
pour au moins un premier conducteur (200) dans le réseau, une portion de pont (230) d'au moins un deuxième conducteur dans le réseau passe entre une première partie (231) de la portion de pont (230) du premier conducteur et le noyau (100) ; et
une deuxième partie (232) de la portion de pont du premier conducteur passe entre une première partie (231) d'une portion de pont (230) d'au moins un troisième conducteur et le noyau.

17. Stator (1) selon la revendication 15 ou la revendication 16, dans lequel les conducteurs (200) du réseau de conducteurs coulés sont agencés de sorte que la portion de pont (230) du conducteur comprenne une section transversale plus grande qu'au moins une parmi la première et/ou la deuxième branche (210, 220).

18. Stator (1) selon l'une quelconque des revendications 15 à 17, dans lequel :
l'au moins un conducteur (200) est pré-coulé de sorte qu'une section transversale de la première branche (210) ait une dimension différente, de préférence plus grande, dans une direction radiale de l'ensemble stator, que celle de la deuxième branche (220).

19. Stator (1) selon l'une quelconque des revendications 15 à 18, dans lequel :
l'au moins un conducteur (200) est pré-coulé de sorte qu'une section transversale de la deuxième branche (220) ait une dimension différente, de préférence plus grande, dans une direction circonférentielle de l'ensemble stator, que celle de la première branche (210).
